# EUROPEAN PATENT SPECIFICATION

(11) **EP 2 121 292 B1**
(45) Date of publication and mention of the grant of the patent: **11.04.2012**
(21) Application number: 06849515.9
(22) Date of filing: 22.12.2006
(51) Int. Cl.: B29D 30/00, B29D 30/06, B29C 35/02

(54) **Process and plant for producing tyres for vehicle wheels**
Verfahren und Anlage zur Herstellung von Reifen für Fahrzeugräder
Procédé et installation pour la production de pneus pour roues de véhicules

(43) Date of publication of application: 25.11.2009
(73) Proprietor: Pirelli Tyre S.p.A., 20126 Milano (IT)
(72) Inventor: MARIANI, Fiorenzo, I-20126 Milano (IT)
(74) Representative: Checcacci, Giorgio
(86) International application number: PCT/IB2006/004176
(87) International publication number: WO 2008/078141

(56) References cited:
- WO-A-01/62481
- US-A- 4 993 906
- US-A- 5 631 028
- US-B1- 6 582 212

## Description

The present invention relates to a process for producing tyres for vehicle wheels.

In particular, the present invention relates to a process for producing tyres built on a toroidal support.

The invention also relates to a plant for producing tyres for vehicle wheels, able to be used for transporting out the aforementioned producing process.

Production cycles of a tyre provide that, after a building process wherein the various components of the same tyre are made and/or assembled in a building line, a moulding and vulcanization process is carried out, in a suitable vulcanization line, adapted for defining the tyre structure according to a desired geometry and tread pattern.

A tyre generally comprises a toroidally ring-shaped carcass including one or more carcass plies, strengthened with reinforcing cords lying in substantially radial planes (a radial plane contains the rotation axis of the tyre). Each carcass ply has its ends integrally associated with at least one metal reinforcing annular structure, known as bead core, constituting the reinforcing at the beads, i.e. at the radially inner ends of the tyre, having the function of enabling the assembling of the tyre with a corresponding mounting rim. Placed crown wise to said carcass is a band of elastomeric material, called tread band, within which, at the end of the moulding and vulcanization steps, a raised pattern is formed for ground contact. A reinforcing structure, generally known as belt structure, is arranged between the carcass and the tread band. Such structure usually comprises, in the case of car tyres, at least two radially superposed strips of rubberised fabric provided with reinforcing cords, usually of metal material, arranged parallel to each other in each strip and in a crossed relationship with the cords of the adjacent strip, preferably symmetrically arranged with respect to the equatorial plane of the tyre. Preferably, the belt structure further comprises at a radially outer position thereof, at least on the ends of the underlying belt strips, also a third layer of textile or metallic cords, circumferentially disposed (at zero degrees).

Finally, in tyres of the tubeless type, that is devoid of an air tube, a radially inner layer, called liner, is present which has imperviousness features for ensuring the air-tightness of the tyre itself.

To the aims of the present invention and in the following claims, by the term "elastomeric material" it is intended a composition comprising at least one elastomeric polymer and at least one reinforcing filler. Preferably, such composition further comprises additives such as cross-linking and/or plasticizing agents. By virtue of the cross-linking agents, such material may be cross-linked by heating, so as to form the final manufactured article.

In the present context, by the term "green tyre" it is indicated a tyre obtained by the building process and not vulcanized yet.

In recent times, tyre production processes in which a green tyre is built on a rigid toroidal support have been introduced in the field. Said processes are preferably used for tyres produced starting from a limited number of elementary semifinished products fed onto said toroidal support whose outer profile coincides with that of the radially inner surface of the tyre to be produced. The toroidal support is moved, preferably by means of a robotized plant, among a plurality of working stations in each of which a particular building step of the tyre is carried out, through automated sequences. At the end of the building steps, the toroidal support with the green tyre supported thereby is arranged inside a vulcanization mould.

An example of the above processes is described in WO 01/32409, in the name of the same Applicant, which illustrates a tyre building line provided with working stations, each arranged to make and assemble at least one structural component of the tyre being processed, wherein at least one series of tyres, comprising at least a first and a second model of tyres that are different from each other, is treated simultaneously, and wherein the transferral of the tyres to the vulcanization line is carried out through robotized arms and according to a transferring rate which is equal to the transferring rate of the tyres to each of said working stations.

On the other hand, WO 01/39963, in the name of the same Applicant, illustrates a process for producing tyres that are different from each other, comprising a building unit having a plurality of working stations, each adapted for assembling at least one structural component on at least one type of tyre being processed, a vulcanization unit, and a device for transferring and moving the tyre being processed, operating between the working stations and the vulcanization unit. Said device for transferring and moving the tyre transfers a green tyre to the vulcanization unit; after vulcanization, it picks up a vulcanized and moulded tyre from the vulcanization unit and moves it to the first working station of the building unit, where the tyre is removed from the corresponding toroidal support. The latter is then moved by the same device for transferring and moving the tyre into a temperature stabilizing device. If the tyre to be produced requires a toroidal support of a different type, the same device picks up the suitable toroidal support from a feeling station and introduces it into the temperature stabilizing device.

EP 1424182 illustrates an apparatus comprising two vulcanizing plants arranged side by side, each comprising a plurality of vulcanizing stations arranged on an arc within a plane. Each station comprises a vulcanizing mould, a mould opening/closing apparatus and a set of tyre transfer devices arranged in central position with respect to the arc and including a rotating arm for loading a green tyre and discharging a vulcanized tyre from each vulcanizing mould.

US 6,582,212 discloses a tyre vulcanizer comprising a vulcanizing/molding unit which is provided with a mold removably and which vulcanizes and molds a green tyre within the mold into a vulcanized tire, a feed system for feeding the green tyre to the vulcanizing/molding unit, and a discharger system for discharging the vulcanized tyre from the vulcanizing/molding unit, the feed system and the discharge system being located on a front side of the tyre vulcanizer.

US 4,993,906 discloses a green tyre feed system comprising pallets, each adapted to be charged with green tyres, pallet loading tables disposed respectively in front of the respective vulcanizing machines installed in a row, shelves disposed in opposition to the pallet loading tables, a stacker crane adapted to travel through a passageway formed between a row of the pallet loading tables and a row of the shelves, a station for receiving pallets sent from forming machines and from the pallet loading tables, and control devices for controlling the stacker crane.

US 5,631,028 discloses a conveyor system that performs a conveyance by using pallets for loading green tyres and device for conveying these pallets, installs a storage area fir storing pallets as they are on the way to convey, and uses robots for transferring the green tyres from a pallet to a tyre vulcanizer.

The Applicant has verified that in the production plants of the type described in EP 1 424 182, that is, provided with two vulcanization lines, the management of two or more vulcanization cycles with different times causes problems in synchronizing the opening/closing steps of the vulcanization moulds and thus problems in the general management of the production plant with negative consequences on productivity.

On the other hand, the increase of the production capacity achieved by modem tyre production processes and plants, like those described in WO 01/32409 and WO 01/39963, has implied the need of providing the simultaneous vulcanization of tyres with different vulcanization times within the same vulcanization plant.

The Applicant has noted that in the above described processes and plants the management of tyres with different vulcanization times causes an unavoidable decrease of the productivity since it is necessary to complete a first vulcanization cycle with a predetermined vulcanization time and therefore a predetermined frequency before setting a second cycle with different vulcanization time and frequency. As an alternative, the tyres that require a vulcanization time different from that set in the first cycle are overvulcanized or, on the contrary, only partly vulcanized and therefore not commercialisable. In both cases, there occurs an undesired decrease of the production cycle efficiency.

The Applicant has therefore perceived that in order to increase the productivity kneeping the production cycle efficiency unchanged it is necessary to have production plants provided with at least two vulcanization lines programmable with different times.

The applicant has further understood that having two vulcanization lines operatively independent one from the other it is advantageously possible to prevent the spreading of any anomalies or faults from the one to the other of the two lines.

The Applicant has therefore found that having a production plant comprising at least two vulcanization lines, each provided with a device for transferring the tyres, which are programmable with different vulcanization times, and with a holding unit operatively interposed between said lines, it is possible to obtain a flexible tyre production plant and process capable of buttering any faults and/or anomalies.

In accordance with a first aspect thereof, the invention relates to a process for producing tyres for vehicle wheels comprising the steps of:
a) building green tyres on respective toroidal supports in at least one building line of a tyre production plant;
b) transferring a first green tyre and the relevant toroidal support to a moulding and vulcanization unit of at least a first vulcanization line of a vulcanization station of the production plant, said first vulcanization line being provided with a first device for transferring the toroidal support;
c) transferring a second green tyre and the relevant toroidal support to a moulding and vulcanization unit of at least a second vulcanization line of the vulcanization station of the production plant, said second vulcanization line being different from the first vulcanization line and provided with a second transfer device different from the first transfer device;
d) moulding and vulcanizing the first green tyre in the moulding and vulcanization unit of the first vulcanization line for a first time interval and the second green tyre in the moulding and vulcanization unit of the second vulcanization line for a second time interval different from the first time interval;
wherein at least one of steps b) and c), is preceded by a step j) of transporting at least one of said green tyres and the relevant toroidal support into a holding unit operatively interposed between said first vulcanization line and said second vulcanization line.

Said process, providing tyre transfers in two or more operatively independent vulcanization lines wherein tyres may be treated with different vulcanization times, and tyre transfers in holding units operatively interposed between said vulcanization lines, allows obviating the above problems of synchronism in the various operating steps.

The process according to the present invention therefore is flexible and efficient

Preferably, after step d), said process comprises the steps of:
e) transferring the moulded and vulcanized tyres with the respective toroidal supports in a respective tyre removal unit of the respective vulcanization line by the respective transfer devices;
f) separating the moulded and vulcanized tyres from the relevant toroidal supports.

Even more preferably, after step f), said process comprises the steps of:
g) transferring the toroidal supports in a respective cooling unit of the respective vulcanization line by means of the respective transfer devices;
h) cooling said toroidal supports.

Preferably, step e) is preceded by a step j') of transporting one of said moulded and vulcanized tyres and the relevant toroidal support into a holding unit operatively interposed between said first vulcanization line and said second vulcanization line.

Even more preferably, step g) is preceded by a step j") of transporting one of said toroidal supports into a holding unit operatively interposed between said first vulcanization line and said second vulcanization line.

By providing multiple transport steps of the tyres into the holding unit, it is in fact possible to achieve an even more flexible process and capable of better buffering any anomalies of the production process.

Advantageously, the transport steps of the supports in input and/or in output from the vulcanization station are carried out by at least one specific device for handling the toroidal supports to and from the vulcanization station.

In this way, the number of operations carried out by the transfer devices is limited, with consequent improvement of the vulcanization station management.

For the same reason, step f) is preferably carried out by a specific handling device. This also allows having a device specialised for transporting out the specific step.

In accordance with a second aspect thereof, the invention relates to a plant for producing tyres for vehicle wheels comprising:
- at least one building line for green tyres on respective toroidal supports;
- at least one vulcanization station comprising a first vulcanization line and a second vulcanization line, each vulcanization line comprising at least one tyre moulding and vulcanization unit;
wherein said vulcanization station comprises:
- at least one holding unit of toroidal supports operatively interposed between said first vulcanization line and said second vulcanization line;
- at least a first transfer device comprised in said first vulcanization line for transferring a toroidal support between said at least one moulding and vulcanization unit of said first tyre vulcanization line and said holding unit;
- at least a second transfer device comprised in said second vulcanization line for transferring a toroidal support between said at least one moulding and vulcanization unit of said second tyre vulcanization line and said holding unit.

Thanks to the presence of a holding unit operatively interposed between a first vulcanization line and a second vulcanization line, which are operatively independent one from the other and provided with own transfer devices, the plant of the present invention allows treating tyres with different vulcanization times without presenting the disadvantages described above.

Preferably, the production plant comprises at least one unit for removing the moulded and vulcanized tyre from the respective toroidal support and at least one unit for cooling said toroidal support.

In that case, said at least one first transfer device is adapted for transferring said toroidal support among at least two of: said at least one moulding and vulcanization unit, said at least one removal unit, said at least one cooling unit of said first vulcanization line, and said holding unit; and said at least one second transfer device is adapted for transferring said toroidal support among at least two of: said at least one moulding and vulcanization unit, said at least one removal unit, said at least one cooling unit of said second vulcanization line, and said holding unit.

Advantageously, said moulding and vulcanization units comprise at least one moulding and vulcanization turntable adapted for housing at least six vulcanization moulds. In fact, in this way it is possible to optimise the production on the basis of the vulcanization times required for the tyres to be produced.

Further features and advantages of invention will be clear from the following description of some preferred examples of production plants and processes according to the invention, made by way of indicating and non-limiting purpose with reference to the annexed drawings, wherein:
- figure 1 shows a schematic layout of a plant for producing tyres for vehicle wheels wherein the process according to the present invention is carried out; and
- figure 2 shows a schematic plan view of a vulcanization station according to one embodiment of the present invention.

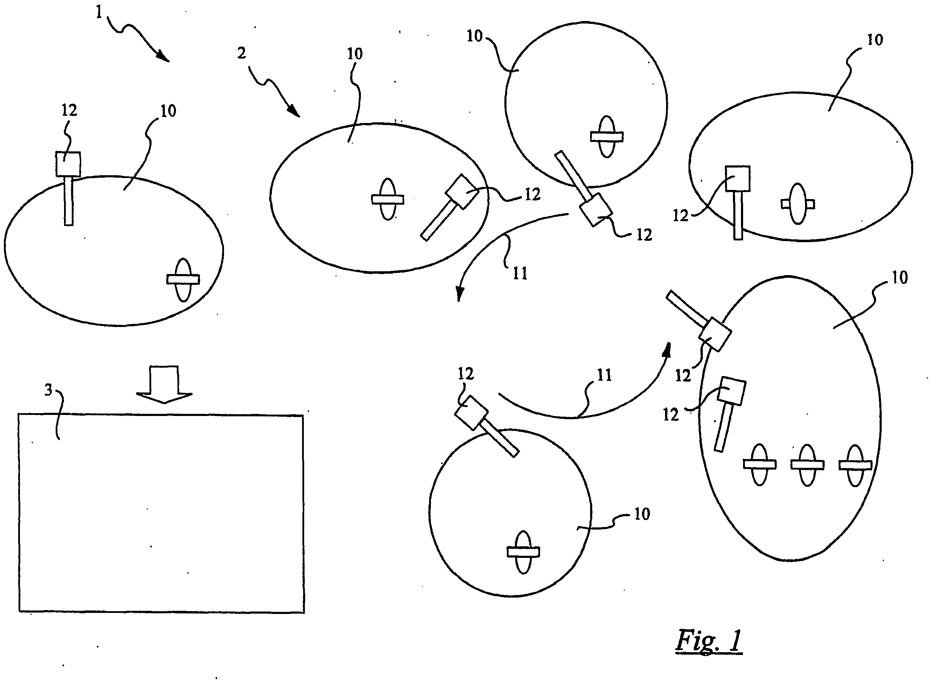

With reference to figure 1, by reference numeral 1 it is generally indicated a plant for producing tyres for vehicle wheels according to the present invention by which the production process according to the present invention is carried out.

Plant 1 comprises a building line 2, wherein each tyre is built by assembling structural components according to a predetermined sequence, and a moulding and vulcanization line 3, wherein each green tyre is moulded and vulcanized, within a respective vulcanization mould, thus becoming a finished product.

The building line 2 comprises a plurality of building stations 10 preferably arranged along a closed loop path indicatively represented by arrows 11 in figure 1.

Preferably, said building stations 10 operate simultaneously with each other, each on at least one tyre for assembling at least one of its structural components thereon.

It should be noted that in the present description and in the subsequent claims, by "structural component" of the tyre it is meant any component selected for example from: liner, sub-liner, carcass ply/plies, sub-belt insert, belt strips either crossing over one another or at zero degrees, attachment sheets for the tread band, tread band, rim, bead filler, textile or metallic reinforcing inserts, anti-abrasion insert, or any portion thereof.

In particular, during the building step the various structural components used for making each tyre are advantageously engaged on a toroidal support whose shape substantially reproduces the internal configuration of the tyre to be obtained. Such a toroidal support has a removable support shaft adapted for retaining the sectors of which the toroidal support is formed of. Such type of toroidal support collapsible or dismountable into a plurality of sectors, so as to be easily removed from the tyre when processing is completed, is for example described in document WO 01/62481 in the name of the Applicant.

Transfer devices 12 operate in the building line 2 for sequentially transferring each of the tyres being processed associated with a respective toroidal support from one of the building stations 10 to the next building station, so as to determine the sequential building of all the tyre components.

Preferably, such transfer devices 12 comprise one or more robotized arms associated with at least one of the building stations 10 and operating on the individual toroidal supports for transporting out the sequential transfer of each tyre being processed.

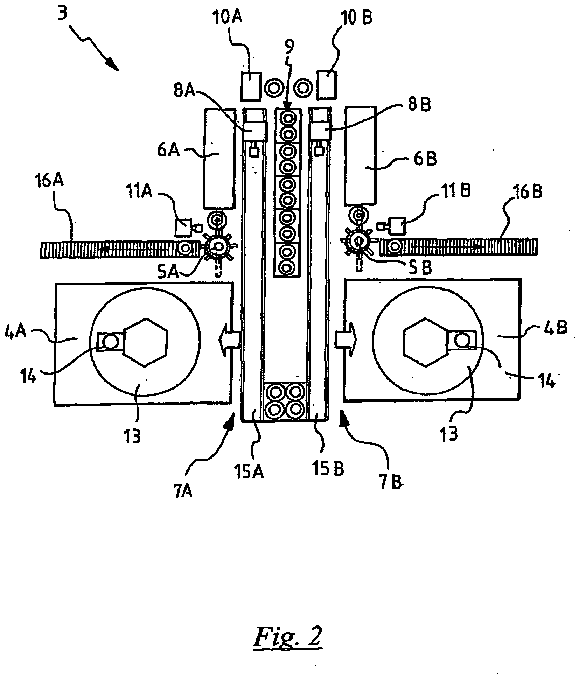

Referring now also to figure 2, it is shown that the vulcanization station 3 comprises a first vulcanization line 7A and a second vulcanization line 7B. Each vulcanization line 7A, 7B comprises a tyre moulding and vulcanization unit 4A, 4B.

According to the present invention, the vulcanization station 3 further comprises at least one holding unit 9 of toroidal supports which is operatively interposed between said first vulcanization line 7A and said second vulcanization line 7B so as to interact with both of them.

Said holding unit 9 is adapted for the temporary storage of the toroidal supports with or without the corresponding tyres between one operating step and the next one of the process according to the present invention.

Moreover, according to the present invention, the vulcanization station 3 comprises a first transfer device 8A, comprised in the first vulcanization line 7A, and a second transfer device 8B comprised in the second vulcanization line 7B.

Said first transfer device 8A is adapted for transferring a toroidal support between a moulding and vulcanization unit 4A of the first vulcanization line 7A of the tyre and the holding unit 9, whereas said second transfer device 8B is adapted for transferring a toroidal support between a moulding and vulcanization unit 4B of the second vulcanization line 7B of the tyre and the holding unit 9.

In the preferred embodiment shown in figure 2, both the first transfer device 8A and the second transfer device 8B, comprise a robotized arm moving on a track

In particular, in such figure, there are shown a first track 15A on which the first transfer device 8A may move and a second track 15B on which the second transfer device 8B may move. As an alternative, it is possible to provide a first rail, or similar devices, on which the first transfer device 8A may move and a second rail, or similar devices, on which the second transfer device 8B may move.

In such embodiment, the holding unit 9 is parallel to the first track 15A and to the second track 15B and arranged symmetrically thereinbetween.

According to a preferred embodiment, the production plant 1 further comprises driving devices, not shown in the figure, for moving the first transfer device 8A and the second transfer device 8B during the process of the present invention.

The moulding and vulcanization units 4A, 4B comprise a moulding and vulcanization turntable 13 which is adapted for housing at least six vulcanization moulds 14, as shown in figure 2.

Preferably, the vulcanization moulds are mounted on a turntable to be driven in rotation so as to make the same vulcanization moulds transport out a closed-loop path, sequentially transporting them, one after the other, to a tyre loading/unloading station, each associated with its own toroidal support.

In this way, a green tyre, after having been loaded into a vulcanization mould, is subjected to a moulding and vulcanization process and, once the suitable time to complete the moulding and vulcanization operations has been achieved, is unloaded from the mould at the same loading/unloading station through rotation of the turntable.

The vulcanization moulds are preferably sealed airtight and are arranged to house a tyre being processed previously built on a toroidal support, the outer surface of which substantially reproduces the internal configuration of the tyre to be obtained. Said vulcanization moulds are provided with working fluid passage devices as illustrated for example in WO 2004/045837, in the name of the same Applicant.

As shown in figure 2, the first vulcanization line 7A comprises a unit 5A for removing the moulded and vulcanized tyre from the respective toroidal support and, accordingly, the second vulcanization line 7B comprises a removal unit 5B.

In this case, the first transfer device 8A is also adapted for transferring the toroidal support between the removal unit 5A of the first vulcanization line 7A and the holding unit 9; and the second transfer device 8B is also adapted for transferring the toroidal support between the removal unit 5B of the second vulcanization line 7B and the holding unit 9.

In the units 5A and 5B for removing the moulded and vulcanized tyre from the respective toroidal support, the toroidal support is dismounted so as to allow the removal of the moulded and vulcanized tyre therefrom and afterwards, it is remounted.

In the embodiment shown in figure 2, such operations are carried out by specific handling devices 11A, 11B, the first vulcanization line 7A and the second vulcanization line 7B of plant 1 are respectively provided with.

In particular, such handling devices 11A, 11B, may be assisted by further auxiliary handling devices (not shown) that comprise a mechanism adapted for removing and replacing a support shaft provided in the toroidal support, so as to allow the latter to be disassembled into a plurality of sectors and reassembled in its original operating shape.

Without such auxiliary handling devices, the first transfer device 8A and the second transfer device 8B are also adapted for transporting out one or more of the operations for dismounting the toroidal support in the removal unit 5A, 5B, such as the removal and the replacing of said support shaft from the toroidal support.

The vulcanization station 3 further advantageously comprises a cooling unit 6A, of the first vulcanization line 7A, and a cooling unit 6B, of the second vulcanization line 7B.

In this case, the first transfer device 8A is adapted for transferring said toroidal support among the moulding and vulcanization unit 4A, the removal unit 5A, the cooling unit 6A of the first vulcanization line 7A and the holding unit 9; and the second transfer device 8B is adapted for transferring said toroidal support among the moulding and vulcanization unit 4B, the removal unit 5B, the cooling unit 6B of the second vulcanization line 7B and the holding unit 9.

The cooling units 6A, 6B are adapted for cooling the toroidal to a temperature suitable for the tyre building process, for example such temperature may be comprised between about 40°C and about 50°C. Once such temperature has been reached, the toroidal support is immediately ready for a new building process.

The production plant 1 is provided with one or more devices for moving the toroidal supports to and from the vulcanization station 3.

In particular, plant 1 comprises a first device 10A for moving the toroidal supports inside and outside the first vulcanization line 7A of the vulcanization station 3 and a second device 10B for moving the toroidal supports inside and outside the second vulcanization line 7B of the vulcanization station 3.

In other words, each of said moving devices 10A, 10B interacts with a single vulcanization line 7A, 7B, nevertheless, each of them may be set up for interacting also with the other vulcanization line 7A , 7B if needed.

As an alternative, each of said moving devices 10A and 10B may only be specialised for the input or the output of the toroidal supports from the vulcanization station 3.

It is also possible to provide that the transfers of the toroidal support within the vulcanization station 3 and/or the transfers of the toroidal supports outside the vulcanization station 3, are carried out by the first transfer device 8A and/or by the second transfer device 8B.

Preferably, the holding unit 9 is adapted for the temporary storage of at least two toroidal supports in output from the building line 2.

According to one preferred embodiment, said holding unit 9 is also adapted for the temporary storage of two or more toroidal supports in output from the moulding and vulcanization unit 4A, 4B, from the removal unit 5A, 5B, and from the cooling unit 6A, 6B of the first vulcanization line 7A or of the second vulcanization line 7B.

According to one embodiment of the present invention, the production plant 1 is provided with transport devices 16A, 16B adapted for transporting the moulded, vulcanized tyre removed from the toroidal support, outside the vulcanization station 3.

Preferably the moving devices 10, the devices for transporting the vulcanized tyres 16A, 16B and the handling devices 11A, 11B comprise a robotized arm or a conveyor belt.

In the embodiment shown in figure 2, the handling devices 11A, 11B comprise a robotized arm whereas the devices for transporting the vulcanized tyres 16A, 16B comprise a conveyor belt.

With reference to the production plant 1 illustrated in figures 1 and 2, one preferred embodiment of a production process according to the invention shall now be described.

In accordance with a first step a), green tyres are assembled on respective toroidal supports assembling each structural component of each tyre according to a predetermined sequence at the above building stations 10 of the building line 2 of the production plant 1.

This building step of each tyre is carried out for example according to methods illustrated in document WO 01/32409, in the name of the same Applicant.

At the end of the building step, the tyre production process according to the present invention provides to transport out the following steps:
b) transferring a first green tyre and the relevant toroidal support to a moulding and vulcanization unit 4A of the first vulcanization line 7A of the vulcanization station 3 of the production plant 1, wherein said first vulcanization line 7A is provided with said first device 8A for transferring the toroidal support;
c) transferring a second green tyre and the relevant toroidal support to a moulding and vulcanization unit 4B of the second vulcanization line 7B of the vulcanization station 3 of the production plant 1, wherein said second vulcanization line 7B is different from the first vulcanization line 7A and is provided with said transfer device 8B, different from the first transfer device 8A.

Afterwards, the step of moulding and vulcanization the green tyres is carried out so as to define the structure of the tyres according to the desired geometry and tread pattern.

In particular, the next step d) provides the moulding and vulcanization of the first green tyre in the moulding and vulcanization unit 4A of the first vulcanization line 7A for a first time interval t1 and of the second green tyre in the moulding and vulcanization unit 4B of the second vulcanization line 7B for a second time interval t2, different from the first time interval tl.

This means that the process is carried out for vulcanization tyres that require different vulcanization times.

According to the present invention, at least one of steps b) and c), and preferably both, are preceded by a step j) of transporting one of said green tyres and the relevant toroidal support into a holding unit 9 operatively interposed between the first vulcanization line 7A and the second vulcanization line 7B.

In accordance with one preferred embodiment, after step d), the process comprises the step e) of transferring the moulded and vulcanized tyres with the respective toroidal supports in a respective tyre removal unit 5A, 5B of the respective vulcanization line 7A, 7B by the respective transfer devices 8A, 8B and then step f) of separating the moulded and vulcanized tyres from the relevant toroidal supports.

Such step e) may be preceded by a step j') of transporting one of the moulded and vulcanized tyres and the relevant toroidal support into the holding unit 9.

Afterwards the toroidal supports are moved in a respective cooling unit 6A, 6B of the respective vulcanization line 7A, 7B by the respective transfer devices 8A, 8B, in accordance with a step g) and then cooled in accordance with a step h) that provides the cooling of the toroidal support to a temperature suitable for the tyre building process, preferably to a temperature substantially comprised between about 40°C and about 50°C.

Also such step g) may be preceded by a step j") of transporting one of the toroidal supports into the holding unit 9.

Once the toroidal supports have been cooled, during step h), step i) is carried out for moving the toroidal supports outside the respective vulcanization lines 7A, 7B of the vulcanization station 3. Also in this case it is advantageous if the transfer of said step i) is preceded by at least one of said steps j'), j").

In other words, it is possible, and in some cases advantageous, if all the transfer steps b), c), e), g) and i) are preceded by a step of stand-by of the toroidal supports into the specific holding unit 9.

One or more of said steps b), c) and i) may be carried out by the specific device 10 for moving the toroidal supports to and from the vulcanization station 3, described above.

One or more of said steps b), c) and i), may also be carried by the transfer devices 8A, 8B.

According to a preferred embodiment, step b) is carried out by the first transfer device 8A and step c) is carried out by the second transfer device 8B.

Preferably, step f) comprises the following sequential steps:
f1) dismounting the toroidal support;
f2) removing the moulded and vulcanized tyre;
f3) remounting the toroidal support.

At least one of them is carried out by the aforementioned handling device 11A, 11B.

According to one preferred embodiment of the process according to the invention, the transfer devices 8A, 8B may also be set up for transporting out one or more of steps j), j') and j")

In accordance with one preferred embodiment, each of steps j), j') and j") comprises the following steps:
j1) transport of the first toroidal support in the holding unit 9 by means of the first transfer device 8A;
j2) transport of the second toroidal support in the holding unit 9 by means of the second transfer device 8B.

Advantageously, each of said steps j), j') and j ") comprises the following steps:
j3) transport of the first toroidal support in one among the moulding and vulcanization unit 4A, the tyre removal unit 5A and the cooling unit 6A of the first vulcanization line 7A by means of the first transfer device 8A;
j4) transport of the second toroidal support in one among the moulding and vulcanization unit 4B, the tyre removal unit 5B and the cooling unit 6B of the second vulcanization line 7B by means of the second transfer device 8B.

Finally, it is possible to provide that said step i) is followed by a step k) of introduction of the toroidal support in the building line (2) for building a further tyre or for beginning a new production cycle starting from the above step a).

## Claims

1. Process for producing tyres for vehicle wheels comprising the steps of:
a) building green tyres on respective toroidal supports in at least one building line (2) of a tyre production plant (1);
b) transferring a first green tyre and the relevant toroidal support to a moulding and vulcanization unit (4A) of at least a first vulcanization line (7A) of a vulcanization station (3) of the production plant (1), said first vulcanization line (7A) being provided with a first device (8A) for transferring the toroidal support;
c) transferring a second green tyre and the relevant toroidal support to a moulding and vulcanization unit (4B) of at least a second vulcanization line (7B) of the vulcanization station (3) of the production plant (1), said second vulcanization line (7B) being different from the first vulcanization line (7A) and being provided with a second transfer device (8B) different from the first transfer device (8A);
d) moulding and vulcanizing the first green tyre in the moulding and vulcanization unit (4A) of the first vulcanization line (7A) for a first time interval (t1) and the second green tyre in the moulding and vulcanization unit (4B) of the second vulcanization line (7B) for a second time interval (t2) different from the first time interval (t1);
wherein at least one of steps b) and c), is preceded by a step j) of transporting at least one of said green tyres and the relevant toroidal support into a holding unit (9) operatively interposed between said first vulcanization line (7A) and said second vulcanization line (7B).

2. Process for producing tyres for vehicle wheels according to claim 1, further comprising the steps of:
e) transferring the moulded and vulcanized tyres with the respective toroidal supports in a respective tyre removal unit (5A, 5B) of the respective vulcanization line (7A, 7B) by means of the respective transfer devices (8A, 8B);
f) separating the moulded and vulcanized tyres from the relevant toroidal supports.

3. Process for producing tyres for vehicle wheels according to claim 2, further comprising the steps of:
g) transferring the toroidal supports in a respective cooling unit (6A, 6B) of the respective vulcanization line (7A, 7B) by means of the respective transfer devices (8A, 8B);
h) cooling said toroidal supports in said cooling unit (6A, 6B).

4. Process for producing tyres for vehicle wheels according to claim 2, wherein step e) is preceded by a step j') of transporting one of said moulded and vulcanized tyres and the relevant toroidal support into a holding unit (9) operatively interposed between said first vulcanization line (7A) and said second vulcanization line (7B).

5. Process for producing tyres for vehicle wheels according to claim 3, wherein step g) is preceded by a step j") of transporting one of said toroidal supports into a holding unit (9) operatively interposed between said first vulcanization line (7A) and said second vulcanization line (7B).

6. Process for producing tyres for vehicle wheels according to claim 2, wherein step f) comprises the following steps:
f1) dismounting the toroidal support;
f2) removing the moulded and vulcanized tyre;
f3) remounting the toroidal support.

7. Process for producing tyres for vehicle wheels according to claim 3, wherein step h) comprises cooling the toroidal support to a temperature comprised between about 40°C and about 50°C.

8. Process for producing tyres for vehicle wheels according to claim 1, 4 or 5, wherein at least one among said steps j), j') and j") is carried out by said transfer devices (8A, 8B).

9. Process for producing tyres for vehicle wheels according to claim 8, wherein each of said steps j), j') and j") comprises the following steps:
j1) transporting the first toroidal support in said holding unit (9) by means of the first transfer device (8A);
j2) transporting the second toroidal support in said holding unit (9) by means of the second transfer device (8B).

10. Process for producing tyres for vehicle wheels according to claim 8 or 9, wherein each of said steps j), j') and j") comprises the following steps:
j3) transporting the first toroidal support in one among the moulding and vulcanization unit (4A), the tyre removal unit (5A) and the cooling unit (6A) of the first vulcanization line (7A) by means of the first transfer device (8A);
j4) transport of the second toroidal support in one among the moulding and vulcanization unit (4B), the tyre removal unit (5B) and the cooling unit (6B) of the second vulcanization line (7B) by means of the second transfer device (8B).

11. Plant (1) for producing tyres for vehicle wheels comprising:
- at least one building line (2) for green tyres on respective toroidal supports;
- at least one vulcanization station (3) comprising:
- a first vulcanization line (7A) and a second vulcanization line (7B), each vulcanization line (7A, 7B) comprising at least one tyre moulding and vulcanization unit (4A, 4B);
- at least one holding unit (9) of toroidal supports operatively interposed between said first vulcanization line (7A) and said second vulcanization line (7B);
- at least a first transfer device (8A) comprised in said first vulcanization line (7A) for transferring a toroidal support between said at least one moulding and vulcanization unit (4A) of said first tyre vulcanization line (7A) and said holding unit (9);
- at least a second transfer device (8B) comprised in said second vulcanization line (7B) for transferring a toroidal support between said at least one moulding and vulcanization unit (4B) of said second tyre vulcanization line (7B) and said holding unit (9).

12. Plant (1) for producing tyres for vehicle wheels according to claim 11, further comprising at least one removal unit (5A, 5B) of the moulded and vulcanized tyre from the respective toroidal support.

13. Plant (1) for producing tyres for vehicle wheels according to claim 12, further comprising at least one cooling unit (6A, 6B) of said toroidal support.

14. Plant (1) for producing tyres for vehicle wheels according to claim 12, wherein
said at least one first transfer device (8A) is adapted for transferring said toroidal support among at least two of: said at least one moulding and vulcanization unit (4A), said at least one removal unit (5A) of said first vulcanization line (7A) and said holding unit (9); and wherein
said at least one second transfer device (8B) is adapted for transferring said toroidal support among at least two of: said at least one moulding and vulcanization unit (4B), said at least one removal unit (5B) of said second vulcanization line (7B) and said holding unit (9).

15. Plant (1) for producing tyres for vehicle wheels according to any one of claims 11 to 14, wherein at least one of said first transfer device (8A) and said second transfer device (8B) is also adapted for moving the toroidal support inside the vulcanization station (3).

16. Plant (1) for producing tyres for vehicle wheels according to any one of claims 11 to 15, wherein at least one of said first transfer device (8A) and said second transfer device (8B) is also adapted for moving the toroidal support outside the vulcanization station (3).

17. Plant (1) for producing tyres for vehicle wheels according to any one of claims 11 to 14, further comprising at least one device (10) for moving the toroidal supports to and from the vulcanization station (3).

18. Plant (1) for producing tyres for vehicle wheels according to any one of claims 11 to 17, wherein said holding unit (9) is adapted for the temporary storage of at least two toroidal supports.

19. Plant (1) for producing tyres for vehicle wheels according to any one of claims 11 to 18, further comprising transport devices (16A, 16B) adapted for transporting the moulded and vulcanized tyres, removed from the toroidal support outside the vulcanization station (3).

20. Plant (1) for producing tyres for vehicle wheels according to any one of claims 11 to 19, further comprising handling devices (11A, 11B) adapted for transporting out at least one of the following operations in the removal unit (5A, 5B): dismounting of the toroidal support, removal of the moulded and vulcanized tyre from the toroidal support, remounting of the toroidal support.

21. Plant (1) for producing tyres for vehicle wheels according to any one of claims 11 to 20, wherein said moulding and vulcanization units (4A, 4B) comprise at least one moulding and vulcanization turntable (13).

## Patentansprüche

1. Verfahren zum Produzieren von Reifen für Fahrzeugräder mit den Schritten des:
a) Fertigens von unbearbeiteten Reifen auf jeweiligen ringförmigen Lagern in wenigstens einer Fertigungsstraße (2) einer Reifenproduktionsfabrik (1) ;
b) Übertragens eines ersten unbearbeiteten Reifens und des jeweiligen ringförmigen Lagers zu einer Formungs- und Vulkanisierungseinheit (4A) wenigstens einer ersten Vulkanisierungsstraße (7A) einer Vulkanisierungsstation (3) der Produktionsfabrik (1), wobei die erste Vulkanisierungsstraße (7A) mit einer ersten Einrichtung (8A) zum Übertragen des ringförmigen Lagers versehen ist;
c) Übertragens eines zweiten unbearbeiteten Reifens und des jeweiligen ringförmigen Lagers zu einer Formungs- und Vulkanisierungseinheit (4B) wenigstens einer zweiten Vulkanisierungsstraße (7B) der Vulkanisierungsstation (3) der Produktionsfabrik (1), wobei die zweite Vulkanisierungsstraße (7β) von der ersten Vulkanisierungsstraße (7A) verschieden ist und mit einer zweiten Übertragungseinrichtung (8B) versehen ist, die von der ersten Übertragungseinrichtung (8A) verschieden ist;
d) Formens und Vulkanisierens des ersten unbearbeiteten Reifens in der Formungs- und Vulkanisierungseinheit (4A) der ersten Vulkanisierungsstraße (7A) für eine erste Zeitspanne (t1) und des zweiten unbearbeiteten Reifens in der Formungs- und Vulkanisierungseinheit (4B) der zweiten Vulkanisierungsstraße (7B) für eine zweite Zeitspanne (t2), die von der ersten Zeitspanne (t1) verschieden ist;
wobei wenigstens einem von Schritten b) und c) ein Schritt j) des Transportierens wenigstens eines der unbearbeiteten Reifen und des jeweiligen ringförmigen Lagers in eine Halteeinheit (9), die operativ zwischen der ersten Vulkanisierungsstraße (7A) und der zweiten Vulkanisierungsstraße (7B) liegt, vorangeht.

2. Verfahren zum Produzieren von Reifen für Fahrzeugräder nach Anspruch 1, ferner mit den Schritten des:
e) Übertragens der geformten und vulkanisierten Reifen mit den jeweiligen ringförmigen Lagern in eine jeweilige Reifenentfernungseinheit (5A, 5B) der jeweiligen Vulkanisierungsstraße (7A, 7B) durch jeweilige Übertragungseinrichtungen (8A, 8B);
f) Trennens der geformten und vulkanisierten Reifen von den jeweiligen ringförmigen Lagern.

3. Verfahren zum Produzieren von Reifen für Fahrzeugräder nach Anspruch 2, ferner mit den Schritten des:
g) Übertragens der ringförmigen Lager in eine jeweilige Kühlungseinheit (6A, 6B) der jeweiligen Vulkanisierungsstraße (7A, 7B) mittels der jeweiligen Übertragungseinrichtungen (8A, 8B);
h) Kühlen der ringförmigen Lager in der Kühlungseinheit (6A, 6B).

4. Verfahren zum Produzieren von Reifen für Fahrzeugräder nach Anspruch 2, bei dem Schritt e) ein Schritt j') des Transportierens eines der geformten und vulkanisierten Reifen und des jeweiligen ringförmigen Lagers in eine Halteeinheit (9), die operativ zwischen der ersten Vulkanisierungsstraße (7A) und der zweiten Vulkanisierungsstraße (7B) liegt, vorangeht.

5. Verfahren zum Produzieren von Reifen für Fahrzeugräder nach Anspruch 3, bei dem Schritt g) ein Schritt j") des Transportierens eines der ringförmigen Lager in eine Halteeinheit (9), die operativ zwischen der ersten Vulkanisierungsstraße (7A) und der zweiten Vulkanisierungsstraße (7B) liegt, vorangeht.

6. Verfahren zum Produzieren von Reifen für Fahrzeugräder nach Anspruch 2, bei dem Schritt f) folgende Schritte aufweist:
f1) Abnehmen des ringförmigen Lagers;
f2) Entfernen des geformten und vulkanisierten Reifens;
f3) Wiederanbringen des ringförmigen Lagers.

7. Verfahren zum Produzieren von Reifen für Fahrzeugräder nach Anspruch 3, bei dem Schritt h) aufweist, dass das ringförmige Lager bis zu einer Temperatur abgekühlt wird, die zwischen ungefähr 40°C und ungefähr 50°C liegt.

8. Verfahren zum Produzieren von Reifen für Fahrzeugräder nach Anspruch 1, 4 oder 5, bei dem wenigstens einer der Schritte j), j') und j") durch die Übertragungseinrichtungen (8A, 8B) ausgeführt wird.

9. Verfahren zum Produzieren von Reifen für Fahrzeugräder nach Anspruch 8, bei dem jeder der Schritte j), j') und j") folgende Schritte aufweist:
j1) Transportieren des ersten ringförmigen Lagers in
die Halteeinheit (9) durch die erste Übertragungseinrichtung (8A);
j2) Transportieren des zweiten ringförmigen Lagers in
die Halteeinheit (9) durch die zweite Übertragungseinrichtung (8B).

10. Verfahren zum Produzieren von Reifen für Fahrzeugräder nach Anspruch 8 oder 9, bei dem jeder der Schritte j), j') und j") folgende Schritte aufweist:
j3) Transportieren des ersten ringförmigen Lagers in
eine unter der Formungs- und Vulkanisierungseinheit (4A), der Reifenentfernungseinheit (5A) und der Kühlungseinheit (6A) der ersten Vulkanisierungsstraße (7A) durch die erste Übertragungseinrichtung (8A);
j4) Transportieren des zweiten ringförmigen Lagers in
eine unter der Formungs- und Vulkanisierungseinheit (4B), der Reifenentfernungseinheit (5B) und der Kühlungseinheit (6B) der zweiten Vulkanisierungsstraße (7B) durch die zweite Übertragungseinrichtung (8B).

11. Fabrik (1) zum Produzieren von Reifen für Fahrzeugräder mit:
- wenigstens einer Fertigungsstraße (2) für unbearbeitete Reifen auf jeweiligen ringförmigen Lagern;
- wenigstens einer Vulkanisierungsstation (3) mit:
- einer ersten Vulkanisierungsstraße (7A) und einer zweiten Vulkanisierungsstraße (7B), wobei jede Vulkanisierungsstraße (7A, 7B) wenigstens eine Reifenformungs- und Vulkanisierungseinheit (4A, 4B) aufweist;
- wenigstens einer Halteeinheit (9) für ringförmige Lager, die operativ zwischen der ersten Vulkanisierungsstraße (7A) und der zweiten Vulkanisierungsstraße (7B) liegt;
- wenigstens einer ersten Übertragungseinrichtung (8A), die in der ersten Vulkanisierungsstraße (7A) enthalten ist, um ein ringförmiges Lager zwischen der wenigstens einen Formungs- und Vulkanisierungseinheit (4A) der ersten Reifenvulkanisierungsstraße (7A) und der Halteeinheit (9) zu ertragen;
- wenigstens einer zweiten Übertragungseinrichtung (8B), die in der zweiten Vulkanisierungsstraße (7B) enthalten ist, um ein ringförmiges Lager zwischen der wenigstens einen Formungs- und Vulkanisierungseinheit (4B) der zweiten Reifenvulkanisierungsstraße (7B) und der Halteeinheit (9) zu übertragen.

12. Fabrik (1) zum Produzieren von Reifen für Fahrzeugräder nach Anspruch 11, ferner mit wenigstens einer Entfernungseinheit (5A, 5B) für den geformten und vulkanisierten Reifen von dem jeweiligen ringförmigen Lager.

13. Fabrik (1) zum Produzieren von Reifen für Fahrzeugräder nach Anspruch 12, ferner mit wenigsten einer Kühlungseinheit (6A, 6B) für das ringförmige Lager.

14. Fabrik (1) zum Produzieren von Reifen für Fahrzeugräder nach Anspruch 12, bei der
die wenigstens eine Übertragungseinrichtung (8A) dafür angepasst ist, das ringförmige Lager zwischen wenigstens zweien aus: der wenigstens einen Formungs- und Vulkanisierungseinheit (4A), der wenigstens einen Entfernungseinheit (5A) der ersten Vulkanisierungsstraße (7A) und der Halteeinheit (9) zu übertragen; und bei der
die wenigstens eine zweite Übertragungseinrichtung (8B) dafür angepasst ist, das ringförmige Lager unter wenigstens zweien aus: der wenigstens einen Formungs- und Vulkanisierungseinheit (4B), der wenigstens einen Entfernungseinheit (5B) der zweiten Vulkanisierungsstraße (7B) und der Halteeinheit (9) zu übertragen.

15. Fabrik (1) zum Produzieren von Reifen für Fahrzeugräder nach einem der Ansprüche 11 bis 14, bei der die erste Übertragungseinrichtung (8A) und/oder die zweite Übertragungseinrichtung (8B) auch dafür angepasst sind, das ringförmige Lager innerhalb der Vulkanisierungsstation (3) zu bewegen.

16. Fabrik (1) zum Produzieren von Reifen für Fahrzeugräder nach einem der Ansprüche 11 bis 15, bei dem die erste Übertragungseinrichtung (8A) und/oder die zweite Übertragungseinrichtung (8B) auch dafür angepasst sind, das ringförmige Lager außerhalb der Vulkanisierungsstation (3) zu bewegen.

17. Fabrik (1) zum Produzieren von Reifen für Fahrzeugräder nach einem der Ansprüche 11 bis 14, ferner mit wenigstens einer Einrichtung (11) zum Bewegen der ringförmigen Lager zu der Vulkanisierungsstation (3) hin und von dieser weg.

18. Fabrik (1) zum Produzieren von Reifen für Fahrzeugräder nach einem der Ansprüche 11 bis 17, bei der die Halteeinheit (9) zum zeitweiligen Aufbewahren von wenigstens zwei ringförmigen Lagern angepasst ist.

19. Fabrik (1) zum Produzieren von Reifen für Fahrzeugräder nach einem der Ansprüche 11 bis 18, ferner mit Transporteinrichtungen (16A, 16B), die dafür angepasst sind, die geformten und vulkanisierten Reifen zu transportieren, die außerhalb der Vulkanisierungsstation (3) von dem ringförmigen Lager entfernt wurden.

20. Fabrik (1) zum Produzieren von Reifen für Fahrzeugräder nach einem der Ansprüche 11 bis 19, ferner mit Handhabungseinrichtungen (11A, 11B), die dafür angepasst sind, wenigstens eine der folgenden Betätigungen in der Entfernungseinheit (5A, 5B) auszuführen: Abnehmen des ringförmigen Lagers, Entfernen des geformten vulkanisierten Reifens von dem ringförmigen Lager, Wiederanbringen des ringförmigen Lagers.

21. Fabrik (1) zum Produzieren von Reifen für Fahrzeugräder nach einem der Ansprüche 11 bis 20, bei dem die Formungs- und Vulkanisierungseinheiten (4A, 4B) wenigstens einen Formungs- und Vulkanisierungsdrehtisch (13) aufweisen.

## Revendications

1. Procédé de production de pneus pour roues de véhicules, comportant les étapes suivantes :
a) construire des pneus crus sur des supports toroïdaux respectifs dans au moins une ligne de construction (2) d'une installation de production de pneus (1) ;
b) transférer un premier pneu cru et le support toroïdal correspondant à une unité de moulage et de vulcanisation (4A) d'au moins une première ligne de vulcanisation (7A) d'une station de vulcanisation (3) de l'installation de production (1), la première ligne de vulcanisation (7A) étant pourvue d'un premier dispositif (8A) pour le transfert du support toroïdal ;
c) transférer un deuxième pneu cru et le support toroïdal correspondant à une unité de moulage et de vulcanisation (4B) d'au moins une deuxième ligne de vulcanisation (7B) de la station de vulcanisation (3) de l'installation de production (1), la deuxième ligne de vulcanisation (7B) étant différente de la première ligne de vulcanisation (7A) et étant pourvue d'un deuxième dispositif de transfert (8B) différent du premier dispositif de transfert (8A) ;
d) mouler et vulcaniser le premier pneu cru dans l'unité de moulage et de vulcanisation (4A) de la première ligne de vulcanisation (7A) pendant un premier intervalle de temps (t1), et le deuxième pneu cru dans l'unité de moulage et de vulcanisation (4B) de la deuxième ligne de vulcanisation (7B) pendant un deuxième Intervalle de temps (t2) différent du premier intervalle de temps (t1) ;
dans lequel l'au moins une des étapes b) et c), est précédée par une étape j) de transport d'au moins un desdits pneus crus et le support toroïdal correspondant dans une unité de maintien (9) fonctionnellement interposée entre la première ligne de vulcanisation (7A) et la deuxième ligne de vulcanisation (7B).

2. Procédé de production de pneus pour roues de véhicules selon la revendication 1, comportant en outre les étapes suivantes :
e) transférer les pneus moulés et vulcanisés avec les supports toroïdaux correspondants dans une unité de démontage de pneu respective (5A, 58), de la ligne de vulcanisation respective (7A, 7B), au moyen des dispositifs de transfert respectifs (8A, 8B),
f) séparer les pneus moulés et vulcanisés des supports toroïdaux correspondants.

3. Procédé de production de pneus pour roues de véhicules selon la revendication 2, comportant en outre les étapes suivantes :
g) transférer les supports toroïdaux dans une unité de refroidissement respective (6A, 6B) de la ligne de vulcanisation respective (7A, 7B) au moyen des dispositifs de transfert respectifs (8A, 8B),
h) refroidir les supports toroïdaux dans l'unité de refroidissement (6A, 6B).

4. Procédé de production de pneus pour roues de véhicules selon la revendication 2, dans lequel l'étape e) est précédée par une étape j') de transport de l'un des pneus moulés et vulcanisés et du support toroïdal correspondant dans une unité de maintien (9) fonctionnellement interposée entre la première ligne de vulcanisation (7A) et la deuxième ligne de vulcanisation (7B).

5. Procédé de production de pneus pour roues de véhicules selon la revendication 3, dans lequel l'étape g) est précédée par une étape j") de transport de l'un des supports toroïdaux dans une unité de maintien (9) fonctionnellement interposée entre la première ligne de vulcanisation (7A) et la deuxième ligne de vulcanisation (7B).

6. Procédé de production de pneus pour roues de véhicules selon la revendication 2, dans lequel l'étape f) comporte les étapes suivantes :
f1) démonter le support toroïdal ;
f2) enlever le pneu moulé et vulcanisé ;
f3) remonter le support toroïdal.

7. Procédé de production de pneus pour roues de véhicules selon la revendication 3, dans lequel l'étape h) comporte le refroidissement du support toroïdal à une température comprise entre environ 40°C et environ 50°C.

8. Procédé de production de pneus pour roues de véhicules selon la revendication 1, 4 ou 5, dans lequel au moins une étape parmi j), j') et j") est effectuée par lesdits dispositifs de transfert (8A, 8B).

9. Procédé de production de pneus pour roues de véhicules selon la revendication 8, dans lequel chacune des étapes j), j') et j") comporte les étapes suivantes :
j1) transporter le premier support toroïdal dans l'unité de maintien (9) au moyen du premier dispositif de transfert (8A) ;
j2) transporter le deuxième support toroïdal dans l'unité de maintien (9) au moyen du deuxième dispositif de transfert (8B).

10. Procédé de production de pneus pour roues de véhicules selon la revendication 8 ou 9, dans lequel chacune des étapes j), j') et j") comporte les étapes suivantes :
j3) transporter le premier support toroïdal dans l'une parmi l'unité de moulage et de vulcanisation (4A), l'unité de démontage des pneus (5A) et l'unité de refroidissement (6A) de la première ligne de vulcanisation (7A) au moyen du premier dispositif de transfert (8A) ;
j4) transporter le deuxième support toroïdal dans l'une parmi l'unité de moulage et de vulcanisation (4B), l'unité de démontage des pneus (5B) et l'unité de refroidissement (6B) de la deuxième ligne de vulcanisation (7B) au moyen du deuxième dispositif de transfert (8B).

11. Installation (1) pour la production de pneus pour roues de véhicules, comportant :
- au moins une ligne de construction (2) pour les pneus crus sur des supports toroïdaux respectifs ;
- au moins une station de vulcanisation (3) comportant :
- une première ligne de vulcanisation (7A) et une deuxième ligne de vulcanisation (7B), chaque ligne de vulcanisation (7A, 7B) comportant au moins une unité de moulage et de vulcanisation de pneu (4A, 4B) ;
- au moins une unité de maintien (9) de supports toroïdaux fonctionnellement interposés entre la première ligne de vulcanisation (7A) et la deuxième ligne de vulcanisation (7B) ;
- au moins un premier dispositif de transfert (8A) compris dans la première ligne de vulcanisation (7A) pour transférer un support toroïdal entre l'au moins une unité de moulage et de vulcanisation (4A) de la première ligne de la vulcanisation de pneus (7A) et l'unité de maintien (9);
- au moins un deuxième dispositif de transfert (8B) compris dans la deuxième ligne de vulcanisation (7B) pour transférer un support toroïdal entre l'au moins une unité de moulage et de vulcanisation (4B) de la deuxième ligne de vulcanisation de pneus (7B) et l'unité de maintien (9).

12. Installation (1) pour la production de pneus pour roues de véhicules selon la revendication 11, comportant en outre au moins une unité de démontage (5A, 5B) du pneu moulé et vulcanisé du support toroïdal respectif.

13. Installation (1) pour la production de pneus pour roues de véhicules selon la revendication 12, comportant en outre au moins une unité de refroidissement (6A, 6B) dudit support toroïdal.

14. Installation (1) pour la production de pneus pour roues de véhicules selon la revendication 12, dans laquelle
l'au moins un premier dispositif de transfert (8A) est adapté pour transférer le support toroïdal parmi au moins deux des : l'au moins une unité de moulage et de vulcanisation (4A), l'au moins une unité de démontage (5A) de la première ligne de vulcanisation (7A) et l'unité de maintien (9) ; et dans laquelle
l'au moins un deuxième dispositif de transfert (8B) est adapté pour transférer le support toroïdal parmi au moins deux des : l'au moins une unité de moulage et de vulcanisation (4B), l'au moins un dispositif de démontage (5B) de la deuxième ligne de vulcanisation (7B) et l'unité de maintien (9).

15. Installation (1) pour la production de pneus pour roues de véhicules selon l'une quelconque des revendications 11 à 14, dans laquelle l'un au moins des premier dispositif de transfert (8A) et deuxième dispositif de transfert (8B) est également adapté pour déplacer le support toroïdal à l'intérieur de la station de vulcanisation (3).

16. Installation (1) pour la production de pneus pour roues de véhicules selon l'une quelconque des revendications 11 à 15, dans laquelle au moins un des premier dispositif de transfert (8A) et deuxième dispositif de transfert (8B) est également adapté pour déplacer le support toroïdal hors de la station de vulcanisation (3).

17. Installation (1) pour la production de pneus pour roues de véhicules selon l'une quelconque des revendications 11 à 14, comportant en outre au moins un dispositif (10) pour déplacer les supports toroïdaux depuis et vers la station de vulcanisation (3).

18. Installation (1) pour la production de pneus pour roues de véhicules selon l'une quelconque des revendications 11 à 17, dans laquelle le dispositif de maintien (9) est adapté pour le stockage temporaire d'au moins deux supports toroïdaux.

19. Installation (1) pour la production de pneus pour roues de véhicules selon l'une quelconque des revendications 11 à 18, comportant en outre des dispositifs de transport (16A, 16B) adaptés pour transporter hors de la station de vulcanisation (3) les pneus moulés et vulcanisés, démontés du support toroïdal.

20. Installation (1) pour la production de pneus pour roues de véhicules selon l'une quelconque des revendications 11 à 19, comportant en outre des dispositifs de manutention (11A, 11B) adaptés pour effectuer l'une au moins des opérations suivantes dans l'unité de démontage (5A, 5B) : démontage du support toroïdal, démontage des pneus moulés et vulcanisés du support toroïdal, remontage du support toroïdal.

21. Installation (1) pour la production de pneus pour roues de véhicules selon l'une quelconque des revendications 11 à 20, dans laquelle les unités de moulage et de vulcanisation (4A, 4B) comportent au moins une plaque tournante de moulage et de vulcanisation (13).
